# EUROPÄISCHE PATENTSCHRIFT

(11) **EP 3 271 592 B1**
(45) Veröffentlichungstag und Bekanntmachung des Hinweises auf die Patenterteilung: **11.12.2019**
(21) Anmeldenummer: 15730456.9
(22) Anmeldetag: 15.06.2015
(51) Int. Cl.: F15B 15/06, F15B 15/14, F15B 15/20, F16K 31/163

(54) **DREHANTRIEB MIT FUNKTIONSMODULANORDNUNG**
ROTARY DRIVE WITH FUNCTIONAL MODULE ARRANGEMENT
ENTRAÎNEMENT ROTATIF MUNI D'UN SYSTÈME FONCTIONNEL MODULAIRE

(43) Veröffentlichungstag der Anmeldung: 24.01.2018
(73) Patentinhaber: Festo AG & Co. KG, 73734 Esslingen (DE)
(72) Erfinder: MÖDINGER, Uwe, 73249 Wernau (DE); SCHNEIDER, Mathias, 70435 Stuttgart (DE); MESSERSCHMIDT, Karl, 73730 Esslingen (DE); FEILER, Andreas, 73529 Schwäbisch Gmünd (DE); DÖRING, Timo, 73760 Ostfildern (DE)
(74) Vertreter: Patentanwälte Magenbauer & Kollegen Partnerschaft mbB
(86) Internationale Anmeldenummer: PCT/EP2015/063324
(87) Internationale Veröffentlichungsnummer: WO 2016/202353

(56) Entgegenhaltungen:
- DE-A1- 10 350 305
- DE-U1- 8 308 885
- US-A- 3 411 409
- US-A- 3 460 799

## Beschreibung

Die Erfindung betrifft einen fluidbetätigten Drehantrieb mit einem als Rohrkörper ausgebildeten Gehäuse, das einen sich in eine Axialrichtung des Gehäuses erstreckenden Kolbenraum aufweist, in dem eine Antriebskolbenanordnung zum Antrieb einer drehbar gelagerten Abtriebswelle beweglich geführt ist, wobei das Gehäuse an einem axialen Ende eine zum Kolbenraum hin offene Stirnseite mit wenigstens einem zur Anbringung eines Gehäusedeckels geeigneten Befestigungsabschnitt aufweist, und mit einer Funktionsmodulanordnung, die eine Elektronikanordnung zur Überwachung, Steuerung und/oder Regelung des Drehantriebs und/oder eine Steuerventilanordnung zur Betätigung des Drehantriebs umfasst.

Ein Drehantrieb dieser Art wird in der Regel auf eine Ventilarmatur aufgesetzt. Die Ventilarmatur wird im Folgenden auch als Prozessventil, und die Kombination aus Ventilarmatur und Drehantrieb als Prozessventilbaueinheit bezeichnet. Als Bestandteil einer Prozessventilbaueinheit wird der Drehantrieb dafür verwendet, ein in einem Prozessfluid befindliches Ventilglied der Ventilarmatur zu betätigen, um einen Fluidstrom zu beeinflussen, regeln und/oder zu sperren. Die Abtriebswelle des Drehantriebs ist dabei an eine Spindel der Ventilarmatur mechanisch angekoppelt. Die Spindel wiederum ist an dem Ventilglied der Ventilarmatur mechanisch angekoppelt, so dass über eine Betätigung der Spindel das Ventilglied betätigt wird. Das Ventilglied der Ventilarmatur ist beispielsweise als Klappe, Drosselklappe, Kegelventil, Kugelventil, oder Kugelhahn ausgebildet.

Die Abtriebswelle wird, wie eingangs erwähnt, von der in dem Kolbenraum beweglich geführten Antriebskolbenanordnung angetrieben. Zweckmäßigerweise unterteilt die Antriebskolbenanordnung den Kolbenraum in mindestens zwei Kammern. Wenigstens eine der Kammern des Kolbenraums kann mit einem Druckfluid beaufschlagt werden, um so eine Bewegung der Antriebskolbenanordnung zu bewirken. Die Beaufschlagung des Druckfluids kann durch eine Steuerventilanordnung gesteuert werden.

Die Betätigung der Antriebskolbenanordnung erfolgt insbesondere über pneumatische Steuerventile, die über die sogenannte "Namur Schnittstelle nach VDI/VDE 3845", einer genormten pneumatischen Schnittstelle zum direkten Anbau von pneumatischen Steuerventilen, mit dem Drehantrieb verbunden sind.

Aus der US 6,135,147 ist ein Drehantrieb mit einer oben an dem Gehäuse des Drehantriebs angebrachten Überwachungsanordnung bekannt, die dazu dient, eine Ventilgliedstellung anzuzeigen. Die Überwachungsanordnung ist dabei entlang der sich nach oben erstreckenden Antriebswelle des Drehantriebs angeordnet.

Aus der DE 601 12 780 T2 ist ein Drehantrieb mit einem als Rohrkörper ausgebildeten Gehäuse bekannt, bei dem seitlich am Gehäuse bzw. an der Mantelfläche des Gehäuses ein Funktionsteil angebracht ist. Das Funktionsteil umfasst Signalübertragungsmittel zum Zuleiten bzw. Übertragen von Steuersignalen zu einem pneumatischen Steuerventil.

Die US 3 460 799 A beschreibt einen Ventilaktuator mit einem länglichen Gehäuse. Auf der einen Seite des Gehäuses befindet sich ein pneumatischer Motor und auf der anderen Seite ein Solenoidventil.

Die US 3 411 409 A beschreibt einen Aktuator mit einem zylindrischen Körper, an dessen Stirnseite eine Solenoid-Abdeckung angeordnet ist, in der sich eine Solenoidspule befindet.

Die DE 83 08 885 U1 beschreibt eine Drehbetätigungsvorrichtung, bei der ein Rückschlag-/Druckbegrenzungsventil und ein Wechselventil in einem einzigen Gehäuse sind, das als Teil der Vorrichtung an einer Stirnseite der Vorrichtung befestigt ist.Es ist eine Aufgabe der Erfindung, einen Drehantrieb mit einer Funktionsmodulanordnung in besonders praktischer und kompakter Bauweise bereitzustellen.

Die Aufgabe wird für einen fluidbetätigten Drehantrieb der eingangs beschriebenen Art mit den Merkmalen des Anspruchs 1 gelöst.

Bei dem fluidbetätigten Drehantrieb ist die Funktionsmodulanordnung an die Stirnseite am axialen Ende des Gehäuses angesetzt und mittels des wenigstens einen Befestigungsabschnitts befestigt.

Die Funktionsmodulanordnung wird also an die Stirnseite angesetzt, die sich, wie eingangs erwähnt, an einem axialen Ende des als Rohrkörper ausgebildeten Gehäuses befindet. Durch das Ansetzen der Funktionsmodulanordnung an dieser Stirnseite wird das Gehäuse des Drehantriebs in Axialrichtung verlängert. So ergibt sich eine praktische und kompakte Bauweise, bei welcher der Bauraum des Drehantriebs hauptsächlich in axialer Richtung vergrößert wird.

Der Kolbenraum weist einen Kolbenraumabschnitt auf, der sich in die Funktionsmodulanordnung hinein erstreckt.

Die Funktionsmodulanordnung weist demnach einen Hohlraum auf, der bei Anbau der Funktionsmodulanordnung an das Gehäuse einen Teil - nämlich den erwähnten Kolbenraumabschnitt - des Kolbenraums bildet. Der Kolbenraum wird somit in Axialrichtung des Gehäuses bzw. seiner eigenen Axialrichtung verlängert.

Vorzugsweise ist der Drehantrieb dazu geeignet, auf eine Ventilarmatur aufgesetzt zu werden. In der Regel entspricht die Axialrichtung des Gehäuses der Ausrichtung der Verrohrung, an welche die von dem Drehantrieb betätigbare Ventilarmatur angeschlossen ist. Somit ist eine Vergrößerung des Bauraums in Axialrichtung des Gehäuses weniger kritisch als die aus dem Stand der Technik bekannte Vergrößerung der Bauhöhe bzw. Baubreite eines Drehantriebs. Sind beispielsweise mehrere Rohrstränge übereinander oder nebeneinander angeordnet, und ist der Bauraum für den Drehantrieb nach oben bzw. zur Seite hin entsprechend beschränkt, so ermöglicht die erfindungsgemäße Verlängerung des Bauraums in Axialrichtung trotzdem den Einsatz eines Drehantriebs mit Funktionsmodulanordnung.

Weiterhin ist erfindungsgemäß die Funktionsmodulanordnung mittels des wenigstens einen Befestigungsabschnitts befestigt, der eigentlich dazu dient, einen Gehäusedeckel an die Stirnseite anzubringen. Dies erzielt den Vorteil, dass keine zusätzlichen Befestigungsabschnitte speziell für die Anbringung der Funktionsmodulanordnung vorgesehen werden müssen, und somit eine einfache und kostengünstige Bauweise erzielt wird.

Zweckmäßigerweise wird die Funktionsmodulanordnung direkt an der Stirnseite des Gehäuses angesetzt. Ausgangspunkt für den erfindungsgemäßen Drehantrieb ist beispielsweise ein Drehantrieb der eingangs erwähnten Art, bei welchem der Gehäusedeckel abgenommen ist, so dass die Stirnseite am axialen Ende des Gehäuses exponiert ist. Die Funktionsmodulanordnung wird dann direkt an die Stirnseite angesetzt und mit Hilfe des wenigstens einen Befestigungsabschnitts am Gehäuse befestigt.

Der wenigstens eine Befestigungsabschnitt ist an der zum Kolbenraum hin offenen Stirnseite - also an einer Stirnseite, die eine Öffnung zu dem Kolbenraum hin aufweist bzw. in welcher der Kolbenraum ausmündet - angeordnet. Die Stirnseite wird insbesondere von dem Querschnitt des als Rohrkörper ausgebildeten Gehäuses bzw. von der Stirnfläche der den Kolbenraum umgebenden Gehäusewandung gebildet.

Bei dem wenigstens einen Befestigungsabschnitt handelt es sich vorzugsweise um wenigstens ein Befestigungsloch. Zweckmäßigerweise sind zwei oder mehr Befestigungsabschnitte bzw. Befestigungslöcher vorgesehen.

Die Funktionsmodulanordnung umfasst, wie eingangs erwähnt, eine Elektronikanordnung zur Überwachung, Steuerung und/oder Regelung des Drehantriebs und/oder eine Steuerventilanordnung zur Betätigung des Drehantriebs. Vorzugsweise dient die Elektronikanordnung dazu, den Drehantrieb dezentral zu steuern.

Die Funktionsmodulanordnung ist insbesondere als Rohrkörper ausgebildet. Zweckmäßigerweise ist die Funktionsmodulanordnung und/oder das Gehäuse derart ausgestaltet, das durch Ansatz der Funktionsmodulanordnung an das Gehäuse der Kolbenraum druckdicht verschlossen wird.

Vorzugsweise umfasst die Antriebskolbenanordnung einen ersten und einen zweiten Antriebskolben, die im Kolbenraum koaxial zueinander in Axialrichtung des Gehäuses angeordnet sind und den Kolbenraum in wenigstens zwei Kammern unterteilen. Zweckmäßigerweise können die beiden Kammern mit verschiedenen Drücken beaufschlagt werden, um so eine Bewegung der Antriebskolben zu bewirken.

Vorteilhafte Weiterbildungen der Erfindung sind Gegenstand der Unteransprüche.

In weiterer Ausgestaltung der Erfindung ist vorgesehen, dass die Funktionsmodulanordnung eine Trennwand aufweist, die den Kolbenraum vorzugsweise abdichtend abschließt.

Die Funktionsmodulanordnung übernimmt demnach die Funktion des Gehäusedeckels, den Kolbenraum abzuschließen. Die Funktionsmodulanordnung kann daher anstelle des Gehäusedeckels an die Stirnseite des Gehäuses angesetzt werden, ohne dass dadurch der Abschluss des Kolbenraums beeinträchtigt wird.

In weiterer Ausgestaltung der Erfindung ist vorgesehen, dass die Funktionsmodulanordnung einen Modulraum aufweist, in dem die Elektronikanordnung und/oder die Steuerventilanordnung angeordnet ist, und die Trennwand den Kolbenraumabschnitt von dem Modulraum trennt, wobei vorzugsweise der Kolbenraumabschnitt und der Modulraum in Axialrichtung des Gehäuses koaxial und/oder hintereinander angeordnet sind.

Durch die Trennung zwischen Modulraum und Kolbenraum wird vermieden, dass im Kolbenraum vorhandene Fluide in den Modulraum eindringen und dort in Kontakt mit einer empfindlichen Vorrichtung wie beispielsweise einer Elektronikanordnung kommen.

Vorzugsweise ist in der Trennwand eine Öffnung vorgesehen, an die ein fluidischer Ausgang der Steuerventilanordnung angeschlossen ist, so dass die zugeordnete Kammer des Kolbenraums mit Druckfluid beaufschlagt werden kann, ohne dass der Druckfluid dabei in den Modulraum eindringt.

In weiterer Ausgestaltung der Erfindung ist vorgesehen, dass der Querschnitt der Funktionsmodulanordnung im Wesentlichen dem Querschnitt des Gehäuses an dessen axialem Ende entspricht.

Der Querschnitt des Gehäuses wird von der Funktionsmodulanordnung beibehalten. Anhand dieser Maßnahme wird gewährleistet, dass die Bauhöhe und/oder Baubreite des Drehantriebs trotz Anbau der Funktionsmodulanordnung nicht vergrößert werden.

Als Querschnitt der Funktionsmodulanordnung bzw. Querschnitt des Gehäuses wird hier der Querschnitt normal bzw. senkrecht zur Axialrichtung des Gehäuses bezeichnet.

Durch die erfindungsgemäße Beibehaltung des Querschnitts des Gehäuses in Axialrichtung und der Verwendung der bereits vorhandenen Befestigungsabschnitte wird ferner der Vorteil einer reinigungsoptimierten Bauweise erzielt, bei welcher die Anzahl von schwer zu reinigenden Vorsprüngen bzw. Vertiefungen des Drehantriebskörpers minimiert wird.

In weiterer Ausgestaltung der Erfindung umfasst der fluidbetätigte Drehantrieb einen Gehäusedeckel, der an einer dem Gehäuse abgewandten Stirnseite der Funktionsmodulanordnung angesetzt ist.

Die Funktionsmodulanordnung ist demnach zwischen dem Gehäusedeckel und der Stirnseite des Gehäuses angeordnet. Vorzugsweise wird die Funktionsmodulanordnung dabei zwischen dem Gehäusedeckel und der Stirnseite des Gehäuses verspannt. Alternativ dazu ist die Befestigung des Gehäusedeckels an der Funktionsmodulanordnung von der Befestigung der Funktionsmodulanordnung am Gehäuse unabhängig, so dass der Gehäusedeckel von der Funktionsmodulanordnung abgenommen werden kann, ohne dass die Verbindung zwischen der Funktionsmodulanordnung und dem Gehäuse beeinträchtigt wird. Dies ist insbesondere von Vorteil, wenn die Funktionsmodulanordnung und das Gehäuse eine druckdichte Einheit bilden.

Die der Funktionsmodulanordnung zugewandte Stirnseite des Gehäusedeckels weist dabei im Wesentlichen dieselbe Geometrie auf wie die dem Gehäuse zugewandte Stirnseite der Funktionsmodulanordnung, so dass der Gehäusedeckel und die Funktionsmodulanordnung miteinander austauschbar an der Stirnseite des Gehäuses angebracht werden können.

Im Ergebnis wird unter Verwendung des bereits vorhandenen Befestigungsabschnitts und unter Beibehaltung der Querschnittgeometrie des Antriebgehäuses die Funktionsmodulanordnung zwischen dem Gehäuse des Drehantriebs und dem Gehäusedeckel eingesetzt.

Der Gehäusedeckel dient vorzugsweise dazu, den vorstehend erwähnten Modulraum der Funktionsmodulanordnung abzuschließen. Dies ist insbesondere dann von Vorteil, wenn der Modulraum zu der dem Gehäuse abgewandten Stirnseite der Funktionsmodulanordnung hin offen ist.

In weiterer Ausgestaltung der Erfindung ist vorgesehen, dass der Gehäusedeckel durch wenigstens ein vorzugsweise in den wenigstens einen Befestigungsabschnitt des Gehäuses greifendes Befestigungsmittel befestigt ist.

Der Gehäusedeckel kann an einem an der Funktionsmodulanordnung vorgesehenen Befestigungsabschnitt, wie beispielsweise einem oder mehreren Montagelöchern, mittels des Befestigungsmittels befestigt werden.

Alternativ dazu kann der an der Funktionsmodulanordnung angesetzte Gehäusedeckel auch an dem wenigstens einen Befestigungsabschnitt des Gehäuses und somit mittels desselben wenigstens einen Befestigungsabschnitts befestigt werden, mit dem auch die Funktionsmodulanordnung befestigt wird.

Vorzugsweise werden zwei oder mehr Befestigungsmittel vorgesehen. Das bzw. die Befestigungsmittel sind zweckmäßigerweise als Schrauben oder als Gewindestangen mit zugeordneten Muttern ausgebildet.

In weiterer Ausgestaltung der Erfindung ist vorgesehen, dass die Funktionsmodulanordnung wenigstens ein Montageloch aufweist, durch das das wenigstens eine Befestigungsmittel geführt ist oder in dem das wenigstens eine Befestigungsmittel befestigt ist.

Vorzugsweise durchsetzt das wenigstens eine Montageloch die Funktionsmodulanordnung in Axialrichtung des Gehäuses. Das wenigstens eine Befestigungsmittel wird demnach mittels des wenigstens einen Montagelochs durch die Funktionsmodulanordnung hindurch zu dem wenigstens einen Befestigungsabschnitt geführt.

Vorzugsweise sind zwei oder mehr Montagelöcher vorgesehen. Insbesondere entspricht die Zahl der Montagelöcher der Zahl an Befestigungsabschnitten und/oder Befestigungsmitteln.

In weiterer Ausgestaltung der Erfindung ist vorgesehen, dass der Gehäusedeckel wenigstens ein Montageloch aufweist, durch das das wenigstens eine Befestigungsmittel geführt ist.

Vorzugsweise wird das wenigstens eine Befestigungsmittel durch das Montageloch geführt und in dem wenigstens einen Montageloch der Funktionsmodulanordnung befestigt.

Alternativ dazu wird das eine Befestigungsmittel durch das wenigstens eine Montageloch des Gehäusedeckels und durch das wenigstens eine Montageloch der Funktionsmodulanordnung zu dem wenigstens einen Befestigungsabschnitt geführt. Folglich werden Gehäusedeckel und Funktionsmodulanordnung durch dasselbe Befestigungsmittel am Gehäuse des Drehantriebs befestigt. Hierdurch wird eine effiziente und kostengünstige Bauweise erzielt.

Vorzugsweise umfasst der Gehäusedeckel zwei oder mehr Montagelöcher. Insbesondere entspricht die Zahl der Montagelöcher des Gehäusedeckels der Zahl an Befestigungsabschnitten und/oder Befestigungsmitteln und/oder Montagelöchern der Funktionsmodulanordnung.

In weiterer Ausgestaltung der Erfindung ist vorgesehen, dass der wenigstens eine Befestigungsabschnitt wenigstens ein Befestigungsloch insbesondere zur Aufnahme des wenigstens einen vorzugsweise als Schraube ausgebildeten Befestigungsmittels aufweist.

Vorzugsweise weist das wenigstens eine Befestigungsloch ein Innengewinde auf. Zweckmäßigerweise sind zwei oder mehr Befestigungslöcher vorgesehen.

Vorzugsweise ist an der der Stirnseite des Gehäuses zugewandten Stirnseite der Funktionsmodulanordnung eine oder mehrere Schrauben vorgesehen, die in das wenigstens eine Befestigungsloch geschraubt ist.

In weiterer Ausgestaltung der Erfindung ist vorgesehen, dass der Drehantrieb einfachwirkend ausgebildet ist und wenigstens eine im Kolbenraum, vorzugsweise im Kolbenraumabschnitt, angeordnete Rückstellfeder aufweist.

Bei einem einfachwirkenden fluidbetätigten Drehantrieb kann die Abtriebswelle über eine Fluidbetätigung der Antriebskolbenanordnung in eine erste Drehrichtung bewegt werden. Für die Bewegung der Abtriebswelle in eine zur ersten Drehrichtung entgegengesetzte zweite Drehrichtung ist wenigstens eine auf die Antriebskolbenanordnung wirkende Rückstellfeder nötig, die bei Fluidbetätigung der Antriebskolbenanordnung bzw. bei Bewegung der Abtriebswelle in die erste Drehrichtung komprimiert wird und dann, bei Wegnahme der Fluidbetätigung, eine Bewegung der Abtriebswelle in die zweite Richtung bewirkt.

Die wenigstens eine Rückstellfeder ist vorzugsweise in dem Kolbenraumabschnitt vorgesehen, der sich in die Funktionsmodulanordnung erstreckt. Zu diesem Zweck ist in dem Kolbenraumabschnitt wenigstens ein Aufnahmeabschnitt vorgesehen. Vorzugsweise ist der wenigstens eine Aufnahmeabschnitt an der vorstehend erwähnten Trennwand angeordnet. Der wenigstens eine Aufnahmeabschnitt ist z.B. als Vertiefung ausgebildet.

In weiterer Ausgestaltung der Erfindung ist vorgesehen, dass an der Stirnseite des Gehäuses wenigstens ein Gehäusekanal ausmündet, durch den wenigstens eine elektrische und/oder eine fluidische Verbindungsleitung in die Funktionsmodulanordnung geführt wird, und/oder wenigstens ein in eine Kammer des Kolbenraums führender gehäuseseitiger Arbeitskanal ausmündet.

Beispielsweise weist die Stirnseite des Gehäuses eine Öffnung zu einem gehäuseseitigen Arbeitskanal auf, der in der Wandung des als Rohrkörpers ausgebildeten Gehäuses zu einer bestimmten Kammer des Kolbenraums führt, um diese z.B. mittels eines in der Funktionsmodulanordnung angeordneten Steuerventils mit einem Druckfluid zu beaufschlagen.

Alternativ oder zusätzlich dazu kann in der Gehäusewandung ein Gehäusekanal für eine elektrische und/oder fluidische Verbindungsleitung vorgesehen sein. Die elektrische Verbindungsleitung kann z.B. eine Stromversorgungs- und/oder Kommunikationsverbindung zwischen der Elektronikanordnung in der Funktionsmodulanordnung und einer Sensoranordnung und/oder eines Stromversorgungsanschlusses in dem Gehäuse bereitstellen. Die fluidische Verbindungsleitung kann beispielsweise dazu dienen, eine Kammer des Kolbenraums mit einem durch die Steuerventilanordnung geschleiften Druckfluid zu beaufschlagen.

Die elektrischen und/oder fluidischen Verbindungen zwischen dem Gehäuse des Drehantriebs und der Funktionsmodulanordnung werden dabei insbesondere innerhalb des aus dem Gehäuse und der Funktionsmodulanordnung gebildeten Körpers geführt. Dadurch wird vermieden, dass diese Leitungen außerhalb des Gehäuses bzw. der Funktionsmodulanordnung angeordnet sind, wo die Wahrscheinlichkeit einer Störung in der Regel höher ist.

Ferner wird durch die Führung der Leitungen innerhalb des aus dem Gehäuse und der Funktionsmodulanordnung gebildeten Körpers vermieden, dass externe Schnittstellen für diese Leitungen vorgesehen werden müssen.

In weiterer Ausgestaltung der Erfindung ist vorgesehen, dass die Funktionsmodulanordnung an der dem Gehäuse zugewandten Stirnseite wenigstens einen zu dem wenigstens einen Gehäusekanal in Axialrichtung fluchtenden Modulkanal aufweist, durch den die wenigstens eine elektrische und/oder die fluidische Verbindungsleitung geführt ist, und/oder wenigstens einen zu dem wenigstens einen gehäuseseitigen Arbeitskanal in Axialrichtung fluchtenden modulseitigen Arbeitskanal aufweist.

Die wenigstens eine elektrische und/oder fluidische Verbindungsleitung wird dabei direkt von dem Gehäuse in die Funktionsmodulanordnung, vorzugsweise in den Modulraum, geführt. Zwischen dem Gehäuse und der Funktionsmodulanordnung muss dementsprechend keine elektrische und/oder fluidische Schnittstelle vorgesehen sein.

Durch die Minimierung der elektrischen und fluidischen Schnittstellen werden die Fehler und Störungen, die an den jeweiligen Schnittstellenanschlüssen potentiell auftreten können, vermieden. Dies gilt insbesondere in extremen Einsatzgebieten, wo z.B. mit extremen Temperaturen oder extremen Umweltbedingungen gerechnet werden muss.

In weiterer Ausgestaltung der Erfindung ist vorgesehen, dass die Funktionsmodulanordnung ein oder mehrere Funktionsmodule aufweist.

Insbesondere werden dabei Funktionsmodule unterschiedlicher Funktion eingesetzt. Beispielsweise weist die Funktionsmodulanordnung ein fluidisches Funktionsmodul, das z.B. die Steuerventilanordnung umfasst, und/oder ein elektronisches Funktionsmodul, das z.B. die Elektronikanordnung umfasst, auf.

In weiterer Ausgestaltung der Erfindung ist vorgesehen, dass die Funktionsmodule in Axialrichtung des Gehäuses hintereinander aufgereiht sind.

Die Funktionsmodule werden dabei vorzugsweise in einer bereits vorstehend beschriebenen Art befestigt, z.B. dadurch, dass sie zwischen Gehäuse und Gehäusedeckel angeordnet bzw. verspannt werden.

Auf diese Weise können weitere Funktionsmodule angebracht werden, ohne dass dafür am Gehäuse weitere Befestigungsabschnitte vorgesehen sein müssen.

Erfindungsgemäß wird ferner eine Prozessventilbaueinheit bereitgestellt, umfassend den vorstehend beschriebenen fluidbetätigten Drehantrieb und eine Ventilarmatur mit einer Spindel, einem Ventilglied und zwei koaxial entlang einer Verrohrungsrichtung angeordneten Verrohrungsanschlüssen, wobei der fluidbetätigte Drehantrieb auf die Ventilarmatur aufgesetzt ist, die Abtriebswelle des fluidbetätigten Drehantriebs an die Spindel der Ventilarmatur mechanisch angekoppelt ist, und die Verrohrungsrichtung parallel zur Axialrichtung des Gehäuses verläuft.

Beispielhafte Ausführungsformen der Erfindung sind in der Zeichnung dargestellt. Dabei zeigt
- Figur 1: eine perspektivische Darstellung eines Drehantriebs gemäß einer ersten Ausführungsform,
- Figur 2: eine Explosionsdarstellung des Drehantriebs gemäß der ersten Ausführungsform,
- Figur 3: eine perspektivische Schnittdarstellung des Drehantriebs gemäß der ersten Ausführungsform,
- Figur 4: eine perspektivische Darstellung eines Drehantriebs gemäß einer zweiten Ausführungsform,
- Figur 5: eine Explosionsdarstellung des Drehantriebs gemäß der zweiten Ausführungsform,
- Figur 6: eine perspektivische Darstellung einer Prozessventilbaueinheit gemäß einer dritten Ausführungsform.

In der nachstehenden Figurenbeschreibung werden für funktionsgleiche Komponenten der dargestellten Ausführungsformen jeweils gleiche Bezeichnungen verwendet, wobei auf eine mehrfache Beschreibung funktionsgleicher Komponenten verzichtet wird.

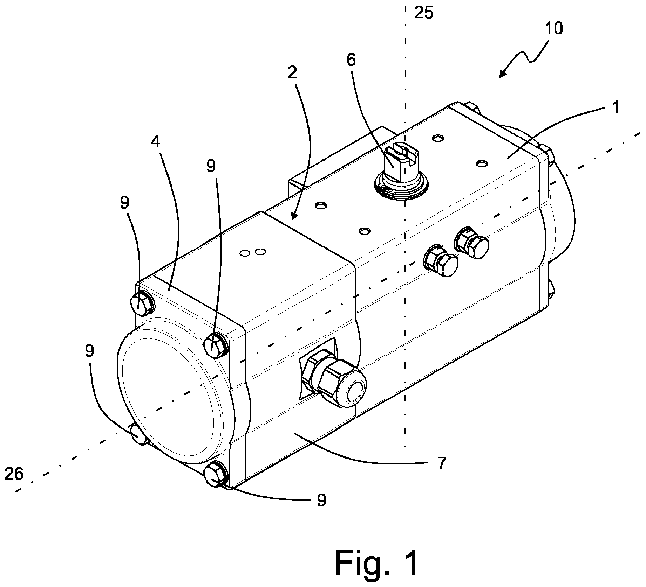

Die Figur 1 zeigt eine perspektivische Darstellung eines Drehantriebs 10 gemäß einer ersten Ausführungsform.

Der Drehantrieb 10 der ersten Ausführungsform ist dazu geeignet, auf eine Ventilarmatur aufgesetzt zu werden, um ein Ventilglied der Ventilarmatur zu betätigen und so einen Fluidstrom zu beeinflussen bzw. zu regeln.

Der Drehantrieb 10 weist ein als Rohrkörper ausgebildetes bzw. rohrförmiges Gehäuse 1 auf, das sich entlang einer Axialrichtung 26 erstreckt. Senkrecht zur Axialrichtung 26 verläuft eine Abtriebswelle 6 durch das Gehäuse 1. Die Abtriebswelle 6 ist um eine gedachte Drehachse 25 drehbar gelagert und wird von einer in der Figur 1 nicht gezeigten Antriebskolbenanordnung 19 angetrieben. Die Abtriebswelle 6 ist dazu geeignet, das Ventilglied der vorstehend erwähnten Ventilarmatur zu betätigen.

Das Gehäuse 1 weist einen sich in die Axialrichtung 26 erstreckenden Kolbenraum 11 auf, in dem die Antriebskolbenanordnung 19 zum Antrieb der drehbar gelagerten Abtriebswelle 6 beweglich geführt ist.

Das Gehäuse 1 weist ferner an einem axialen Ende 2 - d.h. an einem Ende des Gehäuses 1 in Axialrichtung 26 - eine zum Kolbenraum 11 hin offene Stirnseite 3 mit wenigstens einem zur Anbringung eines Gehäusedeckels 4 geeigneten Befestigungsabschnitt 5 auf.

An der Stirnseite 3 ist eine Funktionsmodulanordnung 7 an das Gehäuse 1 angesetzt und mittels des wenigstens einen Befestigungsabschnitts 5 befestigt. Die Funktionsmodulanordnung 7 umfasst eine Elektronikanordnung zur Überwachung, Steuerung und/oder Regelung des Drehantriebs und/oder eine Steuerventilanordnung 27 zur Betätigung des Drehantriebs.

Die Funktionsmodulanordnung 7 weist im Wesentlichen denselben Querschnitt auf wie das Gehäuse 1 an dem axialen Ende 2 und stellt somit effektiv eine Verlängerung des Gehäuses 1 in Axialrichtung 26 dar. Vorzugsweise weist die Funktionsmodulanordnung 7 denselben Querschnitt auf wie das Gehäuse 1 an dem axialen Ende 2. Mit Querschnitt ist an dieser Stelle insbesondere der äußere Verlauf des jeweiligen Körperumfangs senkrecht bzw. normal zur Axialrichtung 26 gemeint. Anschlüsse an der Funktionsmodulanordnung und/oder dem Gehäuse können in diesem Zusammenhang unberücksichtigt bleiben. Vorzugsweise umfasst die Funktionsmodulanordnung 7 einen Rohrkörper, der denselben Querschnitt wie das als Rohrkörper ausgebildete Gehäuse 1 aufweist und fluchtend an dieses angesetzt ist.

An dem von dem Gehäuse 1 abgewandten axialen Ende der Funktionsmodulanordnung 7 ist ein Gehäusedeckel 4 angesetzt. Der Gehäusedeckel 4 weist ebenfalls im Wesentlichen, vorzugsweise genau, denselben Querschnitt auf wie das Gehäuse 1 an dem axialen Ende 2. Der Gehäusedeckel 4 ist mithilfe der Befestigungsmittel 9, die hier als Schrauben ausgebildet sind, an der Funktionsmodulanordnung 7 und/oder an dem Gehäuse 1 befestigt.

Die Befestigungsmittel 9 werden durch Montagelöcher 14 in dem Gehäusedeckel 4 und der Funktionsmodulanordnung 7 hin zu Befestigungsabschnitten des Gehäuses 1 geführt und dort befestigt.

Erfindungsgemäß wird demnach die Funktionsmodulanordnung 7 mithilfe von bereits vorhandenen, für die Befestigung des Gehäusedeckels 4 geeigneten Befestigungsabschnitten an einem axialen Ende 2 des Gehäuses 1 angebracht. Dadurch wird, wie vorstehend bereits erläutert, der Vorteil einer praktischen und kompakten Bauweise erzielt.

Ferner weist der dem Drehantrieb 10 zugewandte Querschnitt der Funktionsmodulanordnung 7 die gleiche Geometrie wie der Gehäusedeckel 4 auf und übernimmt dessen Aufgabe - beispielsweise den vorzugsweise druckdichten Abschluss des Kolbenraums.

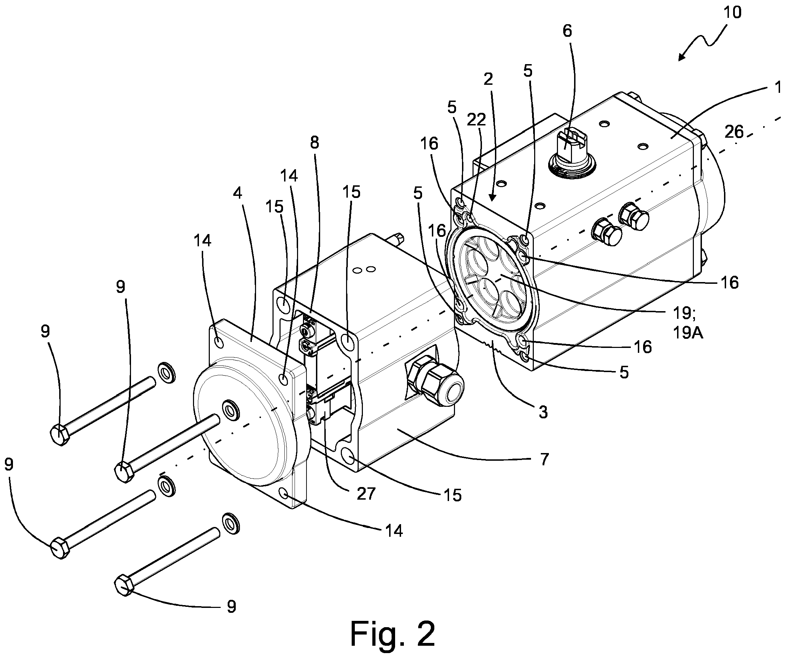

Die Figur 2 zeigt eine Explosionsdarstellung des Drehantriebs 10 gemäß der ersten Ausführungsform. In der Figur 2 sind insbesondere die Stirnseite 3 am axialen Ende 2 des Gehäuses 1 und die dort vorgesehenen, als Befestigungslöcher ausgebildeten Befestigungsabschnitte 5 gezeigt. Ferner zeigt die Figur den in dem Kolbenraum 11 befindlichen ersten Antriebskolben 19A. In der gezeigten Darstellung befindet sich der erste Antriebskolben 19A am axialen Ende 2 des Gehäuses 1, weswegen der dem Gehäuse 1 zugehörige Teil des Kolbenraums 11 nicht sichtbar ist.

Die Befestigungsabschnitte 5 sind zusammen mit den Gehäusekanälen 16 an der Stirnseite 3 um die Öffnung zum Kolbenraum 11 herum verteilt angeordnet. Zudem ist an der Stirnseite 3 ein gehäuseseitiger Arbeitskanal 22 vorgesehen. Die Gehäusekanäle 16 dienen dazu, elektrische und/oder fluidische Verbindungsleitungen von der Funktionsmodulanordnung 7 in das Gehäuse 1 zu führen. Der gehäuseseitige Arbeitskanal 22 ist dafür vorgesehen, mittels einer in der Funktionsmodulanordnung 7 angeordneten Steuerventilanordnung eine Kammer des Kolbenraums 11 mit Druckluft zu beaufschlagen, um so eine Bewegung der Antriebskolbenanordnung 19 zu bewirken. An dieser Stelle sei erwähnt, dass nicht alle in der Figur 2 gezeigten Kanäle bzw. Kanalöffnungen belegt bzw. verwendet werden müssen.

Die Funktionsmodulanordnung 7 weist an der dem Gehäuse 1 zugewandten Stirnseite in Entsprechung zu den Gehäusekanälen 16 angeordnete Modulkanäle auf. Das heißt, die Modulkanäle sind derart angeordnet, dass sie und die Gehäusekanäle 16 in Axialrichtung fluchtend zueinander ausgerichtet sind, wenn die Funktionsmodulanordnung 7 an das Gehäuse 1 angesetzt ist, so dass ein Durchgang zwischen der Funktionsmodulanordnung 7 und dem Gehäuse 1 gebildet wird. Die Funktionsmodulanordnung 7 weist ferner wenigstens einen modulseitigen Arbeitskanal auf, der in Entsprechung zu dem gehäuseseitigen Arbeitskanal 22 angeordnet ist. Alternativ oder zusätzlich zu dieser Konfiguration kann der modulseitige Arbeitskanal auch in Entsprechung zu einem der Gehäusekanäle 16 angeordnet sein.

Aufgrund dieser Ausgestaltung des Drehantriebs 10 können die elektrischen und/oder pneumatischen Verbindungen zwischen dem Gehäuse 1 und der Funktionsmodulanordnung 7 innerhalb des aus der Funktionsmodulanordnung 7 und dem Gehäuse 1 gebildeten Körpers geführt werden.

In der Figur 2 sind ferner die Montagelöcher 14 des Gehäusedeckels 4 und die Montagelöcher 15 der Funktionsmodulanordnung 7 gezeigt. Die Montagelöcher 14 und 15 sind in Entsprechung bzw. fluchtend zueinander angeordnet, so dass der Gehäusedeckel mit den Befestigungsmitteln 9 an der Funktionsmodulanordnung 7 befestigt werden kann. Die Funktionsmodulanordnung 7 wiederum wird mittels wenigstens einem eigenen Befestigungsmittel bzw. einer Schraube, der bzw. die an der der Stirnseite 3 des Gehäuses 1 zugewandten Stirnseite vorgesehenen ist, an dem Gehäuse 1 befestigt.

Diese separate Befestigung des Gehäusedeckels 4 an der Funktionsmodulanordnung 7 und der Funktionsmodulanordnung 7 an dem Gehäuse 1 erzielt den Vorteil, dass bei Beibehaltung eines druckdichten Verschlusses des Kolbenraums 11 der Gehäusedeckel 4 von der Funktionsmodulanordnung 7 abgenommen werden kann. Somit ist die Funktionsmodulanordnung 7 von vorne zugänglich, während gleichzeitig der druckdichte Verschluss des Kolbenraums 11 beibehalten werden kann.

Alternativ zu der vorstehend beschriebenen Konfiguration können der Gehäusedeckel 4 und die Funktionsmodulanordnung 7 aber auch jeweils mit denselben Befestigungsmitteln 9 an denselben Befestigungsabschnitten 5 des Gehäuses 1 befestigt werden.

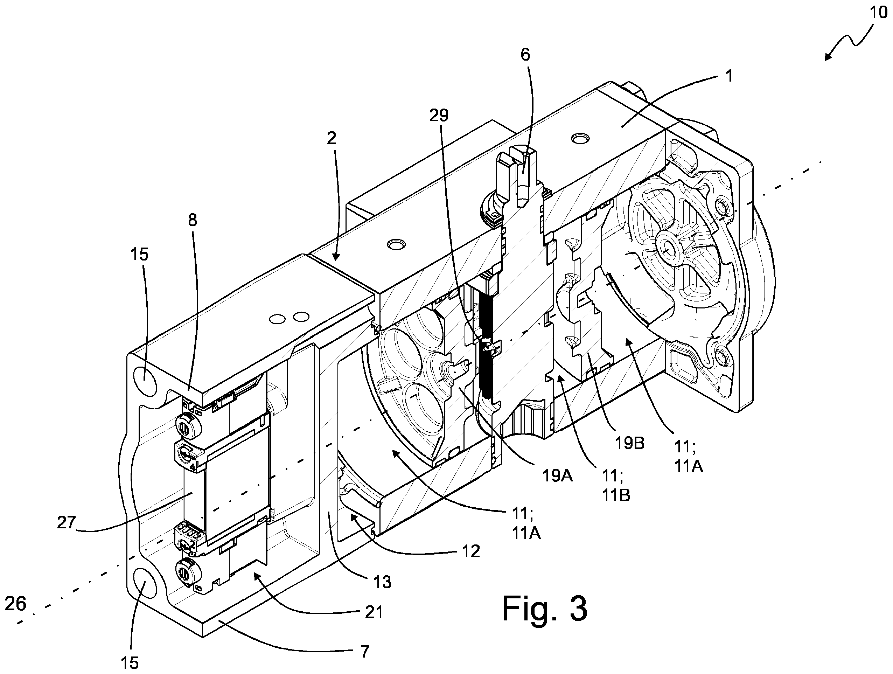

Die Figur 3 zeigt eine perspektivische Schnittdarstellung des Drehantriebs 10 gemäß der ersten Ausführungsform. Der Drehantrieb 10 ist hier ohne Gehäusedeckel 4 gezeigt.

In der vorliegenden Darstellung befindet sich der erste Antriebskolben 19A in einer etwas nach hinten, also weg von der Funktionsmodulanordnung 7 verschobenen Stellung. Dadurch ist vorne am axialen Ende 2 des Gehäuses 1 ein dem Gehäuse 1 zugehöriger Teil des Kolbenraums 11 zu sehen. An den dem Gehäuse 1 zugehörigen Teil des Kolbenraums 11 schließt sich der der Funktionsmodulanordnung 7 zugehörige Kolbenraumabschnitt 12 an. Der Kolbenraum 11 erstreckt sich somit aufgrund des Kolbenraumabschnitts 12 auch in die Funktionsmodulanordnung 7 hinein.

In der Figur 3 ist zusätzlich zum ersten Antriebskolben 19A ein zu dem ersten Antriebskolben koaxial angeordneter zweiter Antriebskolben 19B zu sehen. Die beiden Antriebskolben 19A und 19B umfassen jeweilige hier nicht gezeigte, in Axialrichtung ausgerichtete Zahnstangen, die mit einem an der Abtriebswelle 6 angeordneten Abtriebsritzel 29 in kämmendem Eingriff stehen, um eine Linearbewegung der Antriebskolben 19A und 19B in eine Drehbewegung der Abtriebswelle 6 umzusetzen. Insbesondere sind dabei die Zahnstangen an entgegengesetzten Seiten der Abtriebswelle 6 angeordnet, so dass gegenläufige Linearbewegungen der Antriebskolben 19A und 19B in jeweilige Drehbewegungen der Abtriebswelle 6 umgesetzt werden. So dreht sich die Abtriebswelle 6 in einer ersten Drehrichtung, wenn die Antriebskolben 19A und 19B aufeinander zu laufen, und in einer zweiten Drehrichtung, wenn sich die Antriebskolben 19A und 19B voneinander wegbewegen. Alternativ zu der Anordnung aus Zahnstangen und Abtriebsritzel 29 kann auch eine Hebel-Schwinge (Scotch-Yoke) verwendet werden, um die Linearbewegung der Antriebskolbenanordnung 19 in eine Drehbewegung der Abtriebswelle 6 umzusetzen.

Die Antriebskolben 19A und 19B unterteilen den Kolbenraum 11 in zwei Kammern 11A und 11B. Die erste Kammer 11A ist zweigeteilt und befindet sich zwischen dem ersten Antriebskolben 19A und der Trennwand 13 sowie zwischen dem zweiten Antriebskolben 19B und dem rückseitigen Abschluss des Kolbenraums 11. Die zweite Kammer 11B befindet sich zwischen dem ersten Antriebskolben 19A und dem zweiten Antriebskolben 19B.

Der gezeigte Drehantrieb 10 funktioniert nach dem doppelwirkenden Prinzip; d.h. dass die Kammern 11A und 11B mit verschiedenen Drücken beaufschlagt werden können, so dass mittels Druckbeaufschlagung eine Betätigung der Abtriebswelle 6 in beide Drehrichtungen möglich ist. Zur Druckbeaufschlagung der Kammern wird im gezeigten Beispiel die Steuerventilanordnung 27 verwendet, die über entsprechende modulseitige und gehäuseseitige Arbeitskanäle mit den beiden Kammern verbunden ist.

Die Funktionsmodulanordnung 7 umfasst einen Modulraum 21, der, wie in der Figur 3 beispielhaft gezeigt, die Steuerventilanordnung 27 umfassen kann. Die Steuerventilanordnung 27 umfasst beispielsweise ein 5/2- oder ein 5/3-Wegeventil mit zwei Pilotventilen. Der Modulraum 21 ist von dem Kolbenraumabschnitt 12 durch die Trennwand 13 getrennt. Die Funktionsmodulanordnung 7 bildet somit den Abschluss des Kolbenraums 11.

Alternativ zu dem in der Figur 3 gezeigten doppeltwirkenden Drehantrieb 10 kann der erfindungsgemäße Drehantrieb auch einfachwirkend ausgebildet sein. In diesem Fall kann nur die zweite Kammer 11B mit Druck beaufschlagt werden, während die erste Kammer 11A entlüftet ist. Dementsprechend ist mittels Druckbeaufschlagung eine Betätigung der Abtriebswelle 6 nur in eine erste Drehrichtung möglich. Um eine Betätigung der Abtriebswelle 6 auch in einer zweiten Drehrichtung zu ermöglichen, werden bei dem einfachwirkenden Drehantrieb Rückstellfedern in den Kolbenraum 11 bzw. den Kolbenraumabschnitt 12 eingesetzt, die sich einerseits am ersten Antriebskolben 19A und andererseits an der Trennwand 13 abstützen. Zur Aufnahme der Rückstellfedern können in der Trennwand 13 und im ersten Antriebskolben 19A entsprechende Aufnahmeabschnitte, wie zum Beispiel zylindrische Vertiefungen, vorgesehen sein. Alternativ dazu können die Rückstellfedern auch zwischen dem zweiten Antriebskolben 19B und dem rückseitigen Abschluss des Kolbenraums 11 eingesetzt sein, und an dem zweiten Antriebskolben 19B und dem rückseitigen Abschluss entsprechende Aufnahmeabschnitte, wie zum Beispiel zylindrische Vertiefungen, vorgesehen sein.

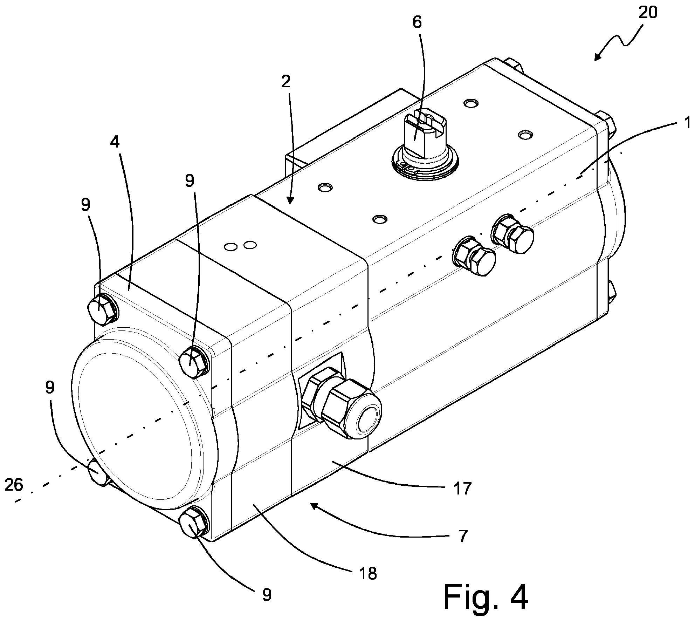

Die Figur 4 zeigt eine perspektivische Darstellung eines Drehantriebs 20 gemäß einer zweiten Ausführungsform. Die zweite Ausführungsform unterscheidet sich von der vorstehend beschriebenen Ausführungsform dadurch, dass bei der zweiten Ausführungsform die Funktionsmodulanordnung 7 zwei Funktionsmodule 17 und 18 umfasst, die hintereinander aufgereiht sind.

Der Gehäusedeckel 4 und das Funktionsmodul 18 werden hier vorzugsweise mittels desselben Befestigungsmittels 9 am Funktionsmodul 17 befestigt. Das Funktionsmodul 17 wird dann mittels wenigstens eines eigenen Befestigungsmittels, das an der der Stirnseite 3 des Gehäuses 1 zugewandten Stirnseite des Funktionsmoduls 17 vorgesehen ist, an dem wenigstens einen Befestigungsabschnitt 5 des Gehäuses 1 befestigt. Aufgrund dieser separaten Befestigung können der Gehäusedeckel 4 und das Funktionsmodul 18 abgenommen werden, ohne die Befestigung zwischen dem Funktionsmodul 17 und dem Gehäuse 1 zu lösen. Dies ist insbesondere von Vorteil, wenn das Funktionsmodul 17 und das Gehäuse 1 eine den Kolbenraum 11 druckdicht abschließende Einheit bilden.

Alternativ dazu können der Gehäusedeckel 4 und die beiden Funktionsmodule 17 und 18 auch mittels desselben Befestigungsmittels 9 am Gehäuse 1 des Drehantriebs 20 befestigt werden. In diesem Fall können in vorteilhafter Weise mehrere Funktionsmodule mittels derselben Befestigungsmittel 9 und derselben Befestigungsabschnitte 5 am Gehäuse 1 befestigt werden.

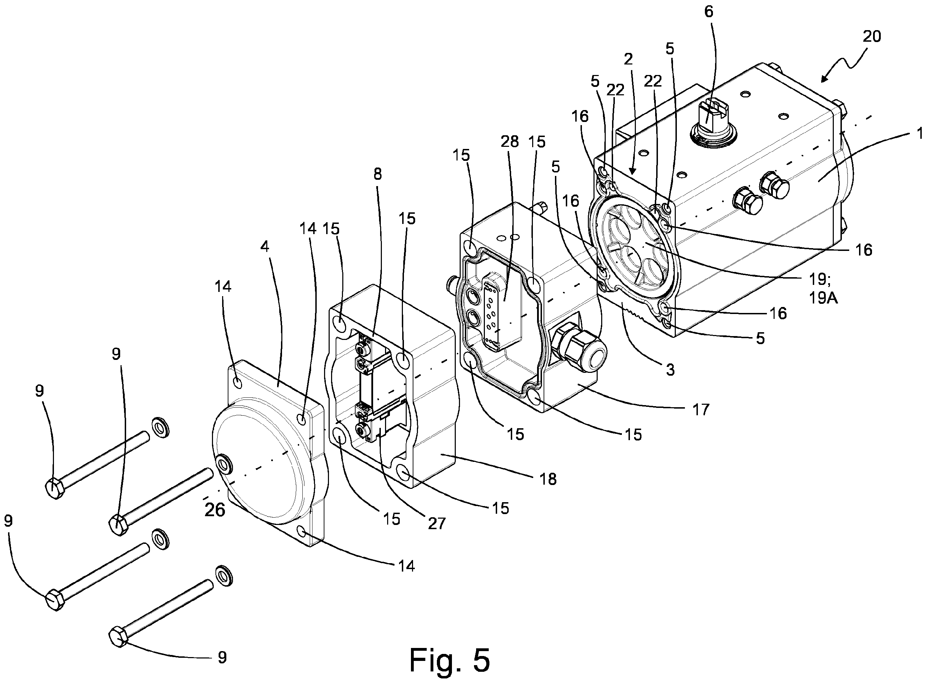

Die Figur 5 zeigt eine Explosionsansicht des in der Figur 4 gezeigten Drehantriebs 20. Wie in der Figur 5 ersichtlich, weisen die Funktionsmodule 17 und 18 im Wesentlichen denselben Querschnitt auf wie das Gehäuse 1 an seinem axialen Ende 2. Dadurch wird der Bauraum des Drehantriebs 10 bei Anbau der Funktionsmodule 17 und 18 nur in seiner Axialrichtung 2 vergrößert.

Zudem sind die Montagelöcher 15 der Funktionsmodule 17 und 18 in Entsprechung zueinander angeordnet, so dass sie, wenn die Funktionsmodule 17 und 18 aneinander gesetzt sind, in Axialrichtung zueinander fluchten bzw. aufeinander liegen. Dadurch können dieselben Befestigungsmittel 9 verwendet werden, um den Gehäusedeckel 4 und das Funktionsmodul 18 an dem Funktionsmodul 17 zu befestigen.

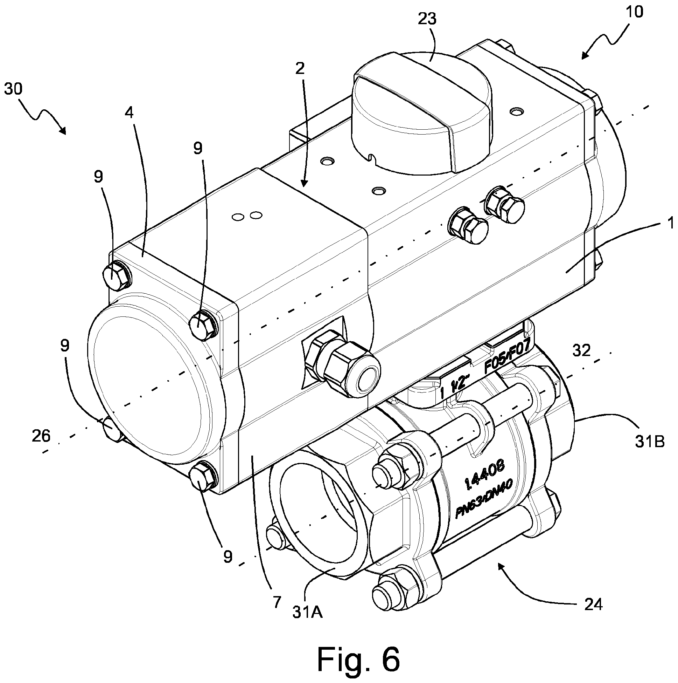

Die Figur 6 zeigt eine perspektivische Darstellung einer Prozessventilbaueinheit 30 einer dritten Ausführungsform. Die Prozessventilbaueinheit 30 umfasst den vorstehend beschriebenen Drehantrieb 10. Alternativ dazu umfasst die Prozessventilbaueinheit 30 den vorstehend beschriebenen Drehantrieb 20. Der Drehantrieb 10 ist auf einer Ventilarmatur 24 aufgesetzt und bildet gemeinsam mit dieser die Prozessventilbaueinheit 30. Der Drehantrieb 10 dient in diesem Zusammenhang dazu, ein Ventilglied, wie beispielsweise eine Klappe, Drosselklappe, Kegelventil, Kugelventil, oder Kugelhahn, der Ventilarmatur 24 mittels der Abtriebswelle 6 zu betätigen. Hierzu ist die Abtriebswelle 6 des Drehantriebs 10 an eine Spindel der Ventilarmatur 24 mechanisch angekoppelt. Die Spindel wiederum ist an das Ventilglied der Ventilarmatur 24 mechanisch angekoppelt, so dass über eine Betätigung der Spindel das Ventilglied betätigt wird.

Der in der Figur 6 gezeigte Drehantrieb 10 weist ferner eine Anzeigeeinrichtung 23 auf, welche dazu dient, die Stellung des Ventilglieds über die Stellung der Abtriebswelle 6 zu erfassen bzw. sichtbar zu machen.

Wie in der Figur 6 gezeigt, wird der Bauraum des Drehantriebs 10 durch den erfindungsgemäßen Anbau der Funktionsmodulanordnung 7 an dem axialen Ende 2 des Gehäuses 1 in Axialrichtung 26 verlängert. Die Axialrichtung 26 entspricht der Verrohrungsrichtung 32 der Ventilarmatur 24, wie dies an der Ausrichtung der Anschlüsse 31A, 31B der Ventilarmatur 24 zu sehen ist. In der Regel ist ausgehend von dem Drehantrieb 10 in Verrohrungsrichtung 32 - also direkt über der Verrohrung - ausreichend Platz vorhanden, so dass eine Bauraumverlängerung in diese Richtung in der Regel kein Problem darstellt. Die erfindungsgemäße Prozessventilbaueinheit 30 weist daher eine besonders platzeffiziente Bauweise auf.

Im Betrieb wird die Prozessventilbaueinheit 30 von einer an einem externen Druckanschluss des Drehantriebs 10 angeschlossenen Leitung mit Druckluft versorgt. Die Druckluft wird durch die Steuerventilanordnung 27 geschleift, die beispielsweise als insbesondere bistabiles 5/3-Wegeventil ausgebildet ist. Die Ausgänge der Steuerventilanordnung 27 sind über entsprechende Arbeitskanäle mit den Kammern 11A und 11B des Kolbenraums 11 verbunden. Die Ausgänge der Steuerventilanordnung 27 werden gemäß einem Steuerbefehl auf einen Druck- oder Entlüftungszustand geschaltet, um so die Antriebskolben 19A und 19B in ihrer aktuellen Stellung zu halten oder aufeinander zu bzw. voneinander weg zu bewegen oder in einer definierten Stellung zu halten. Der Steuerbefehl wird beispielsweise von einer in der Funktionsmodulanordnung 7 angeordneten Elektronikanordnung an die Steuerventilanordnung 27 ausgegeben. Durch die Bewegung der Antriebskolben 19A und 19B wird die Abtriebswelle 6 betätigt, wodurch wiederum die Spindel der Ventilarmatur 24 und schließlich das Ventilglied der Ventilarmatur 24 betätigt wird.

## Patentansprüche

1. Fluidbetätigter Drehantrieb (10; 20) mit einem als Rohrkörper ausgebildeten Gehäuse (1), das einen sich in eine Axialrichtung (26) des Gehäuses (1) erstreckenden Kolbenraum (11) aufweist, in dem eine Antriebskolbenanordnung (19) zum Antrieb einer drehbar gelagerten Abtriebswelle (6) beweglich geführt ist, wobei das Gehäuse (1) an einem axialen Ende (2) eine zum Kolbenraum (11) hin offene Stirnseite (3) mit wenigstens einem zur Anbringung eines Gehäusedeckels (4) geeigneten Befestigungsabschnitt (5) aufweist, und mit einer Funktionsmodulanordnung (7), die eine Elektronikanordnung zur Überwachung, Steuerung und/oder Regelung des Drehantriebs und/oder eine Steuerventilanordnung (27) zur Betätigung des Drehantriebs umfasst, wobei die Funktionsmodulanordnung (7) an die Stirnseite (3) angesetzt und mittels des wenigstens einen Befestigungsabschnitts (5) befestigt ist, **dadurch gekennzeichnet, dass** der Kolbenraum (11) einen Kolbenraumabschnitt (12) aufweist, der sich in die Funktionsmodulanordnung (7) hinein erstreckt.

2. Fluidbetätigter Drehantrieb (10; 20) nach Anspruch 1, **dadurch gekennzeichnet, dass** die Funktionsmodulanordnung (7) eine Trennwand (13) aufweist, die den Kolbenraum (11) vorzugsweise abdichtend abschließt.

3. Fluidbetätigter Drehantrieb (10; 20) nach Anspruch 2, **dadurch gekennzeichnet, dass** die Funktionsmodulanordnung (7) einen Modulraum (21) aufweist, in dem die Elektronikanordnung und/oder die Steuerventilanordnung (27) angeordnet ist, und die Trennwand (13) den Kolbenraumabschnitt (12) von dem Modulraum (21) trennt, wobei vorzugsweise der Kolbenraumabschnitt (12) und der Modulraum (21) in Axialrichtung (26) des Gehäuses (1) koaxial und/oder hintereinander angeordnet sind.

4. Fluidbetätigter Drehantrieb (10; 20) nach einem der voranstehenden Ansprüche, **dadurch gekennzeichnet, dass** der Querschnitt der Funktionsmodulanordnung (7) im Wesentlichen dem Querschnitt des Gehäuses (1) an dessen axialem Ende (2) entspricht.

5. Fluidbetätigter Drehantrieb (10; 20) nach einem der voranstehenden Ansprüche, **gekennzeichnet durch** einen Gehäusedeckel (4), der an einer dem Gehäuse (1) abgewandten Stirnseite (8) der Funktionsmodulanordnung (7) angesetzt ist.

6. Fluidbetätigter Drehantrieb (10; 20) nach Anspruch 5, **dadurch gekennzeichnet, dass** der Gehäusedeckel (4) durch wenigstens ein, vorzugsweise in den wenigstens einen Befestigungsabschnitt (5) greifendes, Befestigungsmittel (9) befestigt ist.

7. Fluidbetätigter Drehantrieb (10; 20) nach Anspruch 6, **dadurch gekennzeichnet, dass** die Funktionsmodulanordnung (7) wenigstens ein Montageloch (15) aufweist, durch das das wenigstens eine Befestigungsmittel (9) geführt ist oder in dem das wenigstens eine Befestigungsmittel (9) befestigt ist.

8. Fluidbetätigter Drehantrieb (10; 20) nach Anspruch 6 oder 7, **dadurch gekennzeichnet, dass** der Gehäusedeckel (4) wenigstens ein Montageloch (15) aufweist, durch das das wenigstens eine Befestigungsmittel (9) geführt ist.

9. Fluidbetätigter Drehantrieb (10; 20) nach einem der Ansprüche 6 bis 8, **dadurch gekennzeichnet, dass** der wenigstens eine Befestigungsabschnitt (5) als wenigstens ein Befestigungsloch insbesondere zur Aufnahme des wenigstens einen vorzugsweise als Schraube ausgebildeten Befestigungsmittels (9) ausgebildet ist.

10. Fluidbetätigter Drehantrieb nach einem der voranstehenden Ansprüche, **dadurch gekennzeichnet, dass** der Drehantrieb (10) einfachwirkend ausgebildet ist und wenigstens eine im Kolbenraum (11), vorzugsweise im Kolbenraumabschnitt (12), angeordnete Rückstellfeder aufweist.

11. Fluidbetätigter Drehantrieb (10; 20) nach einem der voranstehenden Ansprüche, **dadurch gekennzeichnet, dass** an der Stirnseite (3) des Gehäuses (1) wenigstens ein Gehäusekanal (16) ausmündet, durch den wenigstens eine elektrische und/oder eine fluidische Verbindungsleitung in die Funktionsmodulanordnung (7) geführt wird, und/oder wenigstens ein in eine Kammer des Kolbenraums führender gehäuseseitiger Arbeitskanal (22) ausmündet.

12. Fluidbetätigter Drehantrieb (10; 20) nach Anspruch 11, **dadurch gekennzeichnet, dass** die Funktionsmodulanordnung (7) an der dem Gehäuse (1) zugewandten Stirnseite wenigstens einen zu dem wenigstens einen Gehäusekanal (16) in Axialrichtung fluchtenden Modulkanal aufweist, durch den die wenigstens eine elektrische und/oder die fluidische Verbindungsleitung geführt ist, und/oder wenigstens einen zu dem wenigstens einen gehäuseseitigen Arbeitskanal in Axialrichtung fluchtenden modulseitigen Arbeitskanal aufweist.

13. Fluidbetätigter Drehantrieb (20) nach einem der voranstehenden Ansprüche, **dadurch gekennzeichnet, dass** die Funktionsmodulanordnung (7) ein oder mehrere vorzugsweise in Axialrichtung (26) des Gehäuses (1) hintereinander aufgereihte Funktionsmodule (17, 18) aufweist.

14. Prozessventilbaueinheit (30) umfassend einen fluidbetätigten Drehantrieb (10, 20) nach einem der Ansprüche 1 bis 13 und eine Ventilarmatur (24) mit einer Spindel, einem Ventilglied und zwei koaxial entlang einer Verrohrungsrichtung (32) angeordneten Verrohrungsanschlüssen (31A, 31B), wobei der fluidbetätigte Drehantrieb (10, 20) auf die Ventilarmatur aufgesetzt ist, die Abtriebswelle (6) des fluidbetätigten Drehantriebs (10, 20) über die Spindel an das Ventilglied der Ventilarmatur (24) mechanisch angekoppelt ist, und die Verrohrungsrichtung (32) parallel zur Axialrichtung (26) des Gehäuses (1) verläuft.

## Claims

1. Fluid-actuated rotary drive (10; 20) with a housing (1) in the form of a tubular body, which has a piston space (11) extending in an axial direction (26) of the housing (1), in which is movably guided a drive piston assembly (19) for driving a rotatably mounted output shaft (6), wherein the housing (1) has at one axial end (2) an end face (3), which is open towards the piston space (11), with at least one mounting section (5) suitable for the attachment of a housing cover (4), and with a function module assembly (7) which includes an electronic assembly for monitoring, control and/or regulation of the rotary drive and/or a control valve assembly (27) for actuation of the rotary drive, wherein the function module assembly (7) is placed on the end face (3) and secured by means of the at least one mounting section (5), **characterised in that** the piston space (11) has a piston space section (12) which extends into the function module assembly (7).

2. Fluid-actuated rotary drive (10; 20) according to claim 1, **characterised in that** the function module assembly (7) has a partition wall (13) which closes the piston space (11) preferably with sealing.

3. Fluid-actuated rotary drive (10; 20) according to claim 2, **characterised in that** the function module assembly (7) has a module compartment (21) in which the electronic assembly and/or the control valve assembly (27) is provided, and the partition wall (13) separates the piston space section (12) from the module compartment (21), while preferably the piston space section (12) and the module compartment (21) are arranged coaxially and/or one behind the other in the axial direction (26) of the housing (1).

4. Fluid-actuated rotary drive (10; 20) according to any of the preceding claims, **characterised in that** the cross-section of the function module assembly (7) corresponds substantially to the cross-section of the housing (1) at its axial end (2).

5. Fluid-actuated rotary drive (10; 20) according to any of the preceding claims, **characterised by** a housing cover (4), which is placed on an end face (8) of the function module assembly (7) facing away from the housing (1).

6. Fluid-actuated rotary drive (10; 20) according to claim 5, **characterised in that** the housing cover (4) is fixed by at least one mounting means (9), preferably engaging in the at least one mounting section (5).

7. Fluid-actuated rotary drive (10; 20) according to claim 6, **characterised in that** the function module assembly (7) has at least one mounting hole (15), through which the at least one mounting means (9) is guided or in which the at least one mounting means (9) is fixed.

8. Fluid-actuated rotary drive (10; 20) according to claim 6 or 7, **characterised in that** the housing cover (4) has at least one mounting hole (15), through which the at least one mounting means (9) is guided.

9. Fluid-actuated rotary drive (10; 20) according to any of claims 6 to 8, **characterised in that** the at least one mounting section (5) comprises at least one mounting hole, in particular to accommodate the at least one mounting means (9), which preferably comprises a screw.

10. Fluid-actuated rotary drive (10; 20) according to any of the preceding claims, **characterised in that** the rotary drive (10) is single-acting and has at least one restoring spring mounted in the piston space (11), preferably in the piston space section (12).

11. Fluid-actuated rotary drive (10; 20) according to any of the preceding claims, **characterised in that**, at the end face (3) of the housing (1), at least one housing passage (16), through which at least one electrical and/or fluidic connecting line is guided into the function module assembly (7), opens out and/or at least one housing-side operating passage (22) leading into a chamber of the piston space opens out.

12. Fluid-actuated rotary drive (10; 20) according to claim 11, **characterised in that** the function module assembly (7) has on the end face which faces the housing (1) at least one module channel, which is flush in the axial direction with the at least one housing passage (16) and through which the at least one electrical and/or fluidic connecting line is guided, and/or has at least one module-side operating passage flush in the axial direction with the at least one housing-side operating passage.

13. Fluid-actuated rotary drive (20) according to any of the preceding claims, **characterised in that** the function module assembly (7) has one or more function modules (17, 18) lined up one behind the other in the axial direction (26) of the housing (1).

14. Process valve assembly (30) comprising a fluid-actuated rotary drive (10, 20) according to any of claims 1 to 13 and a valve fitting (24) with a spindle, a valve member and two piping connections (31A, 31B) arranged coaxially along a direction of piping (32), wherein the fluid-actuated rotary drive (10, 20) is mounted on the valve fitting, the output shaft (6) of the fluid-actuated rotary drive (10, 20) is coupled mechanically via the spindle to the valve member of the valve fitting (24), and the direction of piping (32) runs parallel to the axial direction (26) of the housing (1).

## Revendications

1. Entraînement rotatif (10 ; 20) à actionnement fluidique avec un boîtier (1) réalisé en tant que corps tubulaire, qui présente une chambre de piston (11) s'étendant dans une direction axiale (26) du boîtier (1), dans laquelle un ensemble formant piston d'entraînement (19) est guidé de manière mobile aux fins de l'entraînement d'un arbre de sortie (6) monté de manière à pouvoir tourner, dans lequel le boîtier (1) présente à une extrémité (2) axiale un côté frontal (3) ouvert vers la chambre de piston (11) avec au moins une section de fixation (5) adaptée pour installer un couvercle de boîtier (4), et avec un ensemble formant module fonctionnel (7), qui comprend un ensemble électronique servant à surveiller, commander et/ou réguler l'entraînement rotatif et/ou un ensemble formant soupape de commande (27) servant à actionner l'entraînement rotatif, dans lequel l'ensemble formant module fonctionnel (7) est placé au niveau du côté frontal (3) et est fixé au moyen de l'au moins une section de fixation (5), **caractérisé en ce que** la chambre de piston (11) présente une section de chambre de piston (12), qui s'étend à l'intérieur de l'ensemble formant module fonctionnel (7).

2. Entraînement rotatif (10; 20) à actionnement fluidique selon la revendication 1, **caractérisé en ce que** l'ensemble formant module fonctionnel (7) présente une cloison de séparation (13), qui ferme de préférence de manière étanche la chambre de piston (11).

3. Entraînement rotatif (10; 20) à actionnement fluidique selon la revendication 2, **caractérisé en ce que** l'ensemble formant module fonctionnel (7) présente une chambre de module (21), dans laquelle l'ensemble électronique et/ou l'ensemble formant soupape de commande (27) sont disposés, et la cloison de séparation (13) sépare la section de chambre de piston (12) de la chambre de module (21), dans lequel de préférence la section de chambre de piston (12) et la chambre de module (21) sont disposées de manière coaxiale et/ou l'une après l'autre dans la direction axiale (26) du boîtier (1).

4. Entraînement rotatif (10 ; 20) à actionnement fluidique selon l'une quelconque des revendications précédentes, **caractérisé en ce que** la section transversale de l'ensemble formant module fonctionnel (7) correspond sensiblement à la section transversale du boîtier (1) à son extrémité (2) axiale.

5. Entraînement rotatif (10 ; 20) à actionnement fluidique selon l'une quelconque des revendications précédentes, **caractérisé par** un couvercle de boîtier (4), qui est placé au niveau d'un côté frontal (8), opposé au boîtier (1), de l'ensemble formant module fonctionnel (7).

6. Entraînement rotatif (10; 20) à actionnement fluidique selon la revendication 5, **caractérisé en ce que** le couvercle de boîtier (4) est fixé par au moins un moyen de fixation (9) s'engageant de préférence dans l'au moins une section de fixation (5).

7. Entraînement rotatif (10; 20) à actionnement fluidique selon la revendication 6, **caractérisé en ce que** l'ensemble formant module fonctionnel (7) présente au moins un trou de montage (15), par lequel l'au moins un moyen de fixation (9) est guidé ou dans lequel l'au moins un moyen de fixation (9) est fixé.

8. Entraînement rotatif (10; 20) à actionnement fluidique selon la revendication 6 ou 7, **caractérisé en ce que** le couvercle de boîtier (4) présente au moins un trou de montage (15), par lequel l'au moins un moyen de fixation (9) est guidé.

9. Entraînement rotatif (10 ; 20) à actionnement fluidique selon l'une quelconque des revendications 6 à 8, **caractérisé en ce que** l'au moins une section de fixation (5) est réalisée en tant qu'au moins un trou de fixation en particulier servant à loger l'au moins un moyen de fixation (9) réalisé de préférence en tant que vis.

10. Entraînement rotatif à actionnement fluidique selon l'une quelconque des revendications précédentes, **caractérisé en ce que** l'entraînement rotatif (10) est réalisé de manière à présenter une action simple et présente au moins un ressort de rappel disposé dans la chambre de piston (11), de préférence dans la section de chambre de piston (12).

11. Entraînement rotatif (10; 20) à actionnement fluidique selon l'une quelconque des revendications précédentes, **caractérisé en ce que** débouche au niveau du côté frontal (3) du boîtier (1) au moins un canal de boîtier (16), par lequel au moins une ligne de liaison électrique et/ou fluidique est guidée dans l'ensemble formant module fonctionnel (7), et/ou débouche au moins un canal de travail (22) côté boîtier menant dans un compartiment de la chambre de piston.

12. Entraînement rotatif (10 ; 20) à actionnement fluidique selon la revendication 11, **caractérisé en ce que** l'ensemble formant module fonctionnel (7) présente au niveau du côté frontal tourné vers le boîtier (1) au moins un canal de module en affleurement dans la direction axiale avec l'au moins un canal de boîtier (16), par lequel l'au moins une ligne de liaison électrique et/ou fluidique est guidée, et/ou présente au moins un canal de travail côté module en affleurement dans la direction axiale avec l'au moins un canal de travail côté boîtier.

13. Entraînement rotatif (20) à actionnement fluidique selon l'une quelconque des revendications précédentes, **caractérisé en ce que** l'ensemble formant module fonctionnel (7) présente un ou plusieurs modules fonctionnels (17, 18) alignés les uns après les autres de préférence dans la direction axiale (26) du boîtier (1).

14. Unité structurelle de soupape de processus (30) comprenant un entraînement rotatif (10, 20) à actionnement fluidique selon l'une quelconque des revendications 1 à 13 et une robinetterie à soupape (24) avec une broche, un organe de soupape et deux raccords de tubage (31A, 31B) disposés de manière coaxiale le long d'une direction de tubage (32), dans laquelle l'entraînement rotatif (10, 20) à actionnement fluidique est placé sur la robinetterie à soupape, l'arbre de sortie (6) de l'entraînement rotatif (10, 20) à actionnement fluidique est accouplé de manière mécanique par l'intermédiaire de la broche à l'organe de soupape de la robinetterie à soupape (24), et la direction de tubage (32) s'étend de manière parallèle par rapport à la direction axiale (26) du boîtier (1).
